# EUROPÄISCHE PATENTSCHRIFT

(11) **EP 4 194 612 B1**
(45) Veröffentlichungstag und Bekanntmachung des Hinweises auf die Patenterteilung: **20.11.2024**
(21) Anmeldenummer: 23154884.3
(22) Anmeldetag: 19.02.2020
(51) Int. Cl.: E02D 17/13, E02F 3/20, F16J 15/40

(54) **ANTRIEBS- UND/ODER GETRIEBEGEHÄUSE FÜR DEN ANTRIEB EINER SCHLITZWANDFRÄSE**
DRIVE AND/OR GEAR HOUSING FOR DRIVING A TRENCH WALL CUTTER
CARTER D'ENTRAÎNEMENT ET/OU DE TRANSMISSION POUR L'ENTRAÎNEMENT D'UNE FRAISE POUR PAROIS MOULÉES

(30) Priorität: 27.02.2019 DE 202019101110 U; 02.05.2019 DE 202019102477 U
(43) Veröffentlichungstag der Anmeldung: 14.06.2023
(62) Teilanmeldung aus: 20707582.1
(73) Patentinhaber: Liebherr-Components Biberach GmbH, 88400 Biberach an der Riß (DE)
(72) Erfinder: WIDMANN, Roland, 88527 Unlingen (DE); HALDER, Johannes, 88521 Ertingen (DE)
(74) Vertreter: Thoma, Michael

(56) Entgegenhaltungen:
- EP-A1- 0 518 293
- EP-A1- 1 529 924
- CN-A- 106 286 780
- DE-A1- 2 162 314
- JP-A- H08 270 007

## Beschreibung

Die vorliegende Erfindung betrifft ein Antriebs- und/oder Getriebegehäuse einer Antriebseinrichtung für eine Schlitzwandfräse, das einen Innenraum zum Aufnehmen von Antriebs- und/oder Getriebeelementen umschließt und zwei relativ zueinander verdrehbare Gehäuseteile umfasst, die durch eine Dichtungseinrichtung zueinander abgedichtet sind, sowie einer Druckausgleichseinrichtung zum Druckausgleich zwischen dem Innenraum und der Umgebung. Die Erfindung betrifft ferner auch die Antriebseinrichtung sowie eine Schlitzwandfräse mit einer solchen Antriebseinrichtung.

Schlitzwandfräsen werden in der Regel im Spezialtiefbau eingesetzt, um im Boden, Gestein oder Untergrund Schlitze zu fräsen, die mit einer Suspension enthaltend beispielsweise Beton zum Bilden einer Schlitzwand verfüllt werden. Solche Schlitzwände sind dabei generell Wandkonstruktionen im Untergrund aus z.B. Beton, Stahlbeton und dergleichen, um den Untergrund abzudichten, abzustützen oder generell in bestimmter Weise zu beeinflussen. Um eine solche Schlitzwand herzustellen, wird mit einer Schlitzwandfräse ein im Wesentlichen senkrechter, nach oben offener Schlitz gefräst, wobei das Fräswerkzeug von oben her in den Boden abgelassen und von einem auf dem Boden abgestützten, vorzugsweise verfahrbaren Trägergerät wie beispielsweise einem Raupenseilbagger geführt wird. Die Schlitzwandfräse umfasst dabei üblicherweise einen länglichen, aufrechten Fräsrahmen, der am Trägergerät vertikal verfahrbar aufgehängt ist und an seinem unteren Ende zumeist mehrere Fräsräder trägt, die um jeweils liegende Achsen gegenläufig antreibbar sein können. Der Antrieb zum rotatorischen Antreiben der Fräsräder kann ebenfalls an einem unteren Abschnitt des Fräsrahmens gelagert sein und beispielsweise einen oder mehrere Hydromotoren umfassen, die die Fräsräder über eine Getriebestufe antreiben können.

Das abgebaute Bodenmaterial kann mithilfe einer Abraumpumpe an die Erdoberfläche gepumpt werden, während der Schlitz ständig mit einer Stützsuspension stabilisiert wird, damit der Schlitz bzw. die Schlitzwände nicht einstürzen. Nach Erreichen der geforderten Tiefe wird der Schlitz dann in der Regel betoniert. Durch die zum Teil beträchtliche Tiefe, die auch Größenordnungen von über 100 m oder 150 m erreichen kann, verursacht die Stützsuspension einen beträchtlichen Druck, der Größenordnungen von 10 bar oder auch mehreren 10 bar, beispielsweise 20 bar betragen kann. Das für die Stützsuspension häufig verwendete Bentonit besitzt beispielsweise eine Dichte im Bereich von 1,0 bis 1,3 t/m³, was zu den genannten beträchtlichen Drücken führt.

Die Abdichtung der Antriebseinrichtung stellt dabei eine große Herausforderung dar, da nicht nur gegen eine verschmutzte Umgebung und darin enthaltene abrasive Medien, sondern zusätzlich auch gegen den erhöhten, beträchtlichen Außendruck aufgrund der Tiefe abgedichtet werden muss. Ab einem gewissen Druckniveau führt dieser Außendruck zu Problemen bei der Abdichtung des Antriebs, wobei insbesondere Schmutz und Wasser in das Innere des Antriebs- und/oder Getriebegehäuses eindringen kann.

Um dieser Problematik zu begegnen, wurde bereits vorgeschlagen, zwischen dem Gehäuseinnenraum und der Umgebung einen Druckausgleich herbeizuführen. Beispielsweise schlägt die Schrift DE 21 62 314 A eine Bodenfräsmaschine vor, bei der das Antriebsgehäuse eine Druckausgleichseinrichtung in Form einer dehnbaren Membran oder eines verschiebbaren Kolbens aufweist, um den Innendruck im Gehäuse an den Außendruck anzugleichen. Der hierdurch herbeiführbare Druckausgleich ist jedoch begrenzt bzw. ist diese Druckausgleichseinrichtung nicht für die enormen Drücke bei Schlitzwänden mit häutigen Bohrtiefen geeignet.

Die Schrift EP 15 29 924 B1 schlägt eine Schlitzwandfräse vor, bei der der gesamte Innenraum des Getriebegehäuses druckbeaufschlagt werden soll, um den Innenraumdruck im Getriebegehäuse an den Umgebungsdruck anzugleichen. Dabei treten jedoch Verluste im Getriebe auf bzw. werden aufwändige, sperrige Druckspeicher bzw. -pumpen benötigt, um das notwendige Druckvolumen bereitstellen zu können. Wird der Druck im Innenraum durch Beaufschlagen mit Druckluft oder - gas erzeugt, sind große Mengen Druckluft bzw. -gas notwendig, wenn das Getriebegehäuse in üblicher Weise nur etwa bis zur Hälfte mit Schmieröl befüllt ist, da dann die andere Hälfte des Getriebeinnenraums mit Druckluft zu füllen ist. Soll beispielsweise mit Druckluft ein Innenraumdruck von 20 bar erzeugt werden, ist etwa das 20-fache des zu befüllenden Volumens an Druckluft erforderlich. Diese Druckluft bzw. das Druckgas muss in einer Art Ballon oder Druckbehälter in der Schlitzwandfräse gespeichert werden oder alternativ über eine Druckleitung mittels Kompressor in das Getriebe gebracht werden. Beides ist aufgrund des benötigten Volumens aufwändig und sperrig.

Insofern wurde bereits angedacht, den Innenraum des Getriebes näherungsweise vollständig mit Schmieröl zu befüllen, um den verbleibenden Luftraum vom Volumen her möglichst klein zu machen. Aufgrund der Inkompressibilität des Schmieröls wird das erforderliche Volumen des Druckmediums minimiert. Allerdings bringt eine solche näherungsweise vollständige Befüllung mit Schmieröl den beträchtlichen Nachteil mit sich, dass stark erhöhte Planschverluste eintreten, die durch die rotierenden Zahnräder, Lager und Dichtungen bei einem voll gefüllten Getriebegehäuse stark ansteigen und zu einem schlechten Wirkungsgrad und demzufolge auch zu erhöhten Temperaturproblemen führen.

Weiterhin beschreibt die Schrift EP 16 66 671 B1 eine Schlitzwandfräse, bei der das Wälzlager des Fräsradträgers durch zwei Dichtungselemente abgedichtet ist. Um die Dichtungselemente mit Schmiermittel zu versorgen und sozusagen durchzuspülen, kann Schmiermittel über eine Einlauföffnung zu den Dichtungen zugeführt und über eine Auslassöffnung wieder abgeführt werden. Auch wenn hierdurch eine gewisse Verlängerung der Lebensdauer erzielt werden kann, bleibt die zuvor beschriebene Problematik bei hohen Druckdifferenzen bestehen.

Der vorliegenden Erfindung liegt daher die Aufgabe zugrunde, eine verbesserte Antriebseinrichtung sowie eine verbesserte Schlitzwandfräse der eingangs genannten Art zu schaffen, die Nachteile des Standes der Technik vermeiden und letzteren in vorteilhafterweise weiterbilden. Insbesondere soll eine verlässliche Abdichtung des Gehäuseinnenraums auch bei sehr hohen Druckunterschieden wie sie bei gro-βen Schlitzwandtiefen auftreten, erreicht werden, ohne dies durch hohe Planschverluste oder voluminöse Druckgaseinrichtungen zu erkaufen.

Erfindungsgemäß wird die genannte Aufgabe durch eine Antriebs- und/oder Getriebegehäuse gemäß Anspruch 1, eine Antriebseinrichtung gemäß Anspruch 12, sowie eine Schlitzwandfräse gemäß Anspruch 15 gelöst. Bevorzugte Ausgestaltungen der Erfindung sind Gegenstand der abhängigen Ansprüche.

Es wird also vorgeschlagen, nicht den gesamten Innenraum des Gehäuses mit Druck zu beaufschlagen, sondern lediglich einen zur Umgebung hin vorgeschalteten Zwischenraum und diesen einerseits zum Innenraum und andererseits zur Umgebung hin abzudichten. Erfindungsgemäß umfasst die Druckausgleichseinrichtung zumindest eine Zwischenkammer, die von einer Druckquelle druckbeaufschlagbar ist und zum Innenraum hin durch eine Innendichtung und zur Umgebung hin durch eine Außendichtung abgedichtet ist. Durch eine solche abgedichtete Zwischenkammer zwischen dem Gehäuseinnenraum und der Umgebung, die vom Volumen her deutlich kleiner als der Innenraum sein kann, ist die Druckbeaufschlagung zum Druckausgleich zwischen Innenraum und Umgebung deutlich einfacher. Insbesondere werden keine großvolumigen Druckspeicher bzw. -pumpen benötigt, da das druckausgleichende Volumen beträchtlich kleiner ist als bei einem Druckbeaufschlagen des gesamten Innenraums. Gleichzeitig können durch den erfolgenden Druckausgleich die Außen- und Innendichtungen an ihre Aufgaben angepasst werden.

Insbesondere können die genannten Innen- und Außendichtungen, die die Zwischenkammer einerseits gegenüber dem Innenraum des Antriebs- und/oder Getriebegehäuses und andererseits gegenüber der Umgebung abdichten, in Form unterschiedlicher Dichtungstypen ausgebildet sein, um den unterschiedlichen Beanspruchungen an den Außen- und Innenseiten der Zwischenkammer gerecht zu werden. Umgebung meint dabei den die Schlitzwandfräse umgebenden, außenliegenden Raum, insbesondere den mit einer Suspension befüllten Bodenschlitz.

Insbesondere kann die Außendichtung zur Abdichtung der Zwischenkammer zur Umgebung hin dazu ausgelegt sein, auch starkem mechanischem Beanspruchungen durch Schmutz und abrasive Medien zu widerstehen, wobei die Dichtung nur begrenzten Drücken widerstehen muss, da durch den Druckausgleich zur Umgebung hin nur begrenzte Druckunterschiede auftreten. Andererseits kann die Innendichtung zur Abdichtung der Zwischenkammer gegenüber dem Gehäuseinnenraum dazu ausgelegt sein, hohe Drücke abzudichten, wobei die Dichtung hier nur begrenzt widerstandsfähig gegen abrasive Medien und Schmutz sein muss.

Insbesondere kann die Außendichtung eine Laufwerkdichtung umfassen, die eine hohe Verschleißfestigkeit gegen raue und abrasive externe Medien besitzt. Eine solche Laufwerkdichtung kann insbesondere zwei Hartmaterial-Dichtringe aufweisen, die aufeinander abgleiten und durch zumindest einen elastischen und/oder elastomeren Dichtring an einem Dichtungsgehäuse abgestützt sein können. Die Hartmaterial-Dichtringe können insbesondere zwei Metalldichtringe sein, die in zwei separaten Gehäuseteilen montiert und gegeneinander verpresst sind, wobei beispielsweise geläppte oder in anderer Weise feinbearbeitete Laufflächen der Hartmaterial-Dichtringe gegeneinander gespannt aufeinander abgleiten können. Der elastische und/oder elastomere Dichtring kann beispielsweise ein O-Ring sein, der die Hartmaterial-Dichtringe im Dichtungsgehäuse zentriert, oder auch ein Elastomer-Ring mit einem von der Kreisform abweichenden Querschnitt. Dabei können auch zwei O-Ringe oder Elastomer-Ringe zum Abdichten der beiden Hartmaterial-Dichtringe gegenüber den Gehäuseteilen vorgesehen sein.

Die Innendichtung zum Abdichten der Zwischenkammer zum Gehäuseinnenraum hin kann vorteilhafterweise ein elastomerer Dichtring sein, der in einer Dichtnut aufgenommen sein kann, um hohen Druckunterschieden Stand zu halten.

Die Innen- und/oder Außendichtungen sind vorteilhafterweise staubdicht und/oder flüssigkeitsdicht und/oder gasdicht ausgebildet, vorzugsweise auch bei Drücken bzw. Druckdifferenzen von mehreren bar oder mehreren 10 bar.

Vorteilhafterweise können auch zwei oder mehr als zwei Zwischenkammern vorgesehen sein, die zwischen dem Innenraum des Antriebs- bzw. Getriebegehäuses und der Umgebung angeordnet und dabei hintereinander geschaltet sein können, sodass die Schnittstelle zwischen den beiden zueinander verdrehbaren Gehäuseteilen nacheinander durch die mehreren Zwischenkammern geht bzw. abgedichtet wird. Um von der Umgebung zum Innenraum des Gehäuses zu gelangen, muss nacheinander jede der mehreren Zwischenkammern durchdrungen werden.

Dabei kann jede der genannten Zwischenkammern jeweils mit einer Innendichtung zum Innenraum hin und mit einer Außendichtung zur Umgebung hin abgedichtet sein, wobei die Innen- und Außendichtungen zumindest einer oder jeder Zwischenkammer in der zuvor genannten Weise verschieden ausgebildet sein können. Insofern als die genannten Zwischenkammern hintereinander geschaltet angeordnet sind, müssen die genannten Außendichtungen nicht direkt zur Umgebung abdichten und die Innendichtungen nicht direkt zum Innenraum hin abdichten, da jeweils eine weiter außen liegende Zwischenkammer bzw. einer weiter innen liegende Zwischenkammer zwischengeschaltet sein kann. Beispielsweise dichtet die Innendichtung einer äußeren Zwischenkammer zu einer inneren Zwischenkammer hin ab, während die Außendichtung einer inneren Zwischenkammer zu einer weiter außen liegenden Zwischenkammer abdichtet. Nichtsdestotrotz dichten die Außendichtungen zumindest mittelbar zur Umgebung und die Innendichtungen zumindest mittelbar zum Innenraum hin.

In vorteilhafter Weiterbildung der Erfindung kann die zumindest eine Zwischenkammer als Ringkammer ausgebildet sein, die sich konzentrisch um die Drehachse herum erstreckt, um die die beiden Gehäuseteile zueinander verdrehbar sind.

Je nach Ausbildung und Anordnung der Schnittstelle zwischen den beiden verdrehbaren Gehäuseteilen kann die zumindest eine Zwischenkammer an einer Stirnseite oder einer Umfangsseite des Antriebs- und/oder Getriebegehäuses angeordnet sein. Insbesondere kann sich die Zwischenkammer um die Außenmantelfläche eines der Gehäuseteile herum erstrecken, wobei die Zwischenkammer eine sich umfangsseitig erstreckende Ringkammer bilden kann.

Sind die beiden Gehäuseteile durch ein Wälzlager oder ein Gleitlager verdrehbar zueinander abgestützt, kann sich die genannte Zwischenkammer vorteilhafterweise benachbart, insbesondere in Richtung der Drehachse zu dem Wälz- oder Gleitlager versetzt, neben dem genannten Wälz- oder Gleitlager erstrecken.

In Weiterbildung der Erfindung kann das Antriebs- und/oder Getriebegehäuse an einem Lagerschild befestigt sein, der beispielsweise an dem Fräsrahmen einer Schlitzwandfräse befestigt sein kann und/oder einen Antriebsmotor tragen kann, wobei das Antriebs- und/oder Getriebegehäuse einen an dem Lagerschild befestigten, vom Lagerschild in Richtung der Drehachse vorspringenden Anschlussträger umfassen kann, der hülsenförmig ausgebildet sein kann und von einem napfförmigen Getriebedeckel verschlossen, insbesondere umgriffen sein kann, der relativ zu dem genannten Anschlussträger drehbar gelagert ist. Beispielsweise kann zur Drehlagerung ein Wälz- und/oder Gleitlager zwischen einem Randsteg des Gehäusedeckels und dem hülsenförmigen Anschlussträger vorgesehen, insbesondere umfangsseitig angeordnet und/oder als Radiallager ausgebildet sein.

Die zumindest eine Zwischenkammer kann dabei umfangsseitig zwischen dem hülsenförmigen Anschlussträger und dem Randsteg des napfförmigen Gehäusedeckels und/oder angrenzend an den Lagerschild angeordnet sein.

Sind mehrere Zwischenkammern vorgesehen, können die Zwischenkammern als Ringkammern mit unterschiedlichem Durchmesser ausgebildet sein, wobei die Zwischenkammern zumindest teilweise ineinander geschachtelt und/oder in radialer Richtung betrachtet einander überlappend angeordnet sein können. Insbesondere können die Zwischenkammern in einer gemeinsamen Ebene, die sich senkrecht zur Drehachse der Gehäuseteile erstreckt, angeordnet sein.

Die zumindest eine Zwischenkammer kann vorteilhafterweise über einen Druckfluidkanal von der Druckquelle her druckbeaufschlagt werden, welcher Druckfluidkanal sich zumindest teilweise durch den zuvor genannten Lagerschild und/oder durch den zuvor genannten Anschlussträger erstrecken kann.

Sind mehrere Zwischenkammern vorgesehen, kann es vorteilhaft sein, separate Druckanschlüsse für die verschiedenen Zwischenkammern vorzusehen, um die Zwischenkammern einzeln und/oder unabhängig voneinander mit Druckmittel beaufschlagen zu können. Eine solche unabhängige Druckbeaufschlagung mehrerer Zwischenkammern besitzt den Vorteil, dass bei Verschleiß der Dichtungen einer Kammer bzw. Undichtigkeit einer Zwischenkammer ein Druckausgleich immer noch über die andere Zwischenkammer erfolgen kann und das System funktionsfähig bleibt.

Um keine großen Druckspeicher oder sperrige, großvolumige Druckpumpen bereitstellen zu müssen, kann die zumindest eine Zwischenkammer ein Volumen besitzen, das im Vergleich zum Innenraum des Gehäuses sehr klein ist. In Weiterbildung der Erfindung kann die Zwischenkammer ein Volumen besitzen, das weniger als 10% oder auch weniger als 5% des Volumens des Innenraums betragen kann.

Vorteilhafterweise kann das Druckniveau in der zumindest einen Zwischenkammer variabel gesteuert werden. Eine Steuervorrichtung zum Steuern des von der Druckquelle in der zumindest einen Zwischenkammer bereitgestellten Kammerdrucks kann dabei in Abhängigkeit des Umgebungsdrucks und/oder der Frästiefe arbeiten, beispielsweise dergestalt, dass der Kammerdruck in der Zwischenkammer mit zunehmendem Außen- bzw. Umgebungsdruck und/oder mit zunehmender Frästiefe erhöht wird, um die Druckdifferenz an der Außendichtung bzw. zwischen Umgebung und Zwischenkammer begrenzt zu halten.

In vorteilhafter Weiterbildung der Erfindung kann der Kammerdruck in der zumindest einen Zwischenkammer mittels einer Drucküberwachungseinrichtung überwacht werden, um eine Undichtigkeit der Zwischenkammer und/oder einen ungewollten Druckabfall und damit mangelhaften Druckausgleich feststellen zu können. Vorteilhafterweise kann eine Anzeigevorrichtung in Abhängigkeit eines Signals der Drucküberwachungseinrichtung anzeigen, wenn sich der Kammerdruck außerhalb eines vorbestimmten Bereichs befindet. Alternativ oder zusätzlich kann auch ein zeitlicher Verlauf des Kammerdrucks bestimmt werden, um beispielsweise einen schleichenden Druckabfall bzw. ein schleichendes Versagen durch Verschleiß der Dichtungen bestimmen zu können. Stellt sich beispielsweise ein kontinuierlich leichter Druckabfall ein, kann ein Wartungssignal bzw. ein Druckabfallsignal gegeben werden, um frühzeitig Verschleiß zu erkennen.

Vorteilhafterweise kann die Überwachungseinrichtung auch eine Schmiermittelniveau-Sensorik zum Erfassen des Schmierstoffstands im Antriebs- und/oder Getriebegehäuse aufweisen, um eine Zunahme des Schmierstoffstands im Innenraum des Gehäuses erfassen zu können. Eine solche Zunahme des Schmierstoffstands kann, insbesondere in Verbindung mit einem Druckabfallsignal, das einen Druckabfall in der Zwischenkammer angibt, dazu verwendet werden, zu bestimmen, ob die Leckage in das Innere des Gehäuses auftritt und die Innendichtung der Zwischenkammer verschleißt.

In vorteilhafter Weiterbildung der Erfindung kann die zumindest eine Zwischenkammer an einen Spülkreislauf angebunden sein, durch den eine Spülflüssigkeit, insbesondere Spülöl, durch die Zwischenkammer hindurchgespült werden kann. Die Zwischenkammer kann hierzu mit einem Spülflüssigkeits-Einlass und einem Spülflüssigkeits-Auslass verbunden sein, wobei Einlass und Auslass vorteilhafterweise benachbart am gleichen Abschnitt der Zwischenkammer oder an gegenüberliegende Kammerabschnitte angebunden sein können, beispielsweise beide auf der Oberseite oder auf gegenüberliegenden Mittelabschnitten des umfangsseitigen Ringkanals, um sicherzustellen, dass die Spülflüssigkeit durch die gesamte Zwischenkammer hindurchgespült wird. Durch ein Spülen der Zwischenkammer kann diese gereinigt werden und können abrasive Partikel, die über die Außendichtung hinweg in die Zwischenkammer gelangt sind, ausgespült werden. Das genannte Spülsystem kann dabei einen Filter aufweisen, der die Spülflüssigkeit bzw. darin enthaltene Partikel filtert.

In vorteilhafter Weiterbildung der Erfindung kann eine Spülsteuerung vorgesehen sein, die in zeitlich vorbestimmten Intervallen und/oder in Abhängigkeit der Betriebszeit und/oder in Abhängigkeit der Umdrehungen des Gehäuses die zumindest eine Zwischenkammer zyklisch spülen kann.

Je nach Ausbildung der Antriebseinrichtung und/oder des Antriebsstrangs können die Gehäuseteile unterschiedliche Funktionen besitzen. In vorteilhafter Weiterbildung der Erfindung kann der Innenraum, der von den Gehäuseteilen umgeben wird, zumindest eine Planetengetriebestufe aufnehmen. Ist eine solche Planetengetriebestufe in dem Gehäuseinnenraum vorgesehen, kann einer der beiden Gehäuseteile drehfest mit dem Sonnenrad und/oder dem Planetenträger verbunden sein, während das andere Gehäuseteil als Hohlrad dienen kann bzw. mit dem Hohlrad drehfest verbunden sein kann.

Unabhängig von der Ausbildung des Getriebes kann einer der Gehäuseteile ein rotierend antreibbares Abtriebselement bilden, an dem ein Fräsrad der Schlitzwandfräse befestigbar ist, um das Fräsrad rotatorisch anzutreiben.

Die Erfindung wird nachfolgend anhand bevorzugter Ausführungsbeispiele und zugehörigen Zeichnungen näher erläutert. In den Zeichnungen zeigen:
- Fig. 1:: eine schematische, perspektivische Darstellung einer Schlitzwandfräse nach einer vorteilhaften Ausbildung der Erfindung,
- Fig. 2:: eine perspektivische Ansicht der Antriebseinrichtung für die Fräsräder der Schlitzwandfräse aus Figur 1, wobei an einem oberen Abschnitt eines Lagerschilds der Antriebsmotor gelagert ist und an einem unteren Abschnitt des Lagerschilds das Getriebegehäuse angeordnet ist, an welchem die Fräsräder der Schlitzwandfräse aus Figur 1 befestigt sind,
- Fig. 3:: einen Querschnitt durch die Antriebseinrichtung aus Figur 2, der die beiden zueinander drehbaren Gehäuseteile des Getriebegehäuses und die Zwischenkammer zum Druckausgleich zeigt,
- Fig. 4:: eine teilweise geschnittene Seitenansicht der Antriebseinrichtung aus den Figuren 2 und 3, die die Druckkanäle zum Druckbeaufschlagen der Zwischenkammern zeigt,
- Fig. 5:: eine Schnittansicht entlang der Linie E-E in Figur 4, die die Anordnung der Zwischenkammern zwischen den Gehäuseteilen und deren Druckbeaufschlagung über die Druckkanäle zeigt,
- Fig. 6:: eine Seitenansicht einer Antriebseinrichtung nach einer weiteren vorteilhaften Ausführung der Erfindung in einer Darstellung ähnlich Figur 6, wobei separate Druckkanäle zum unabhängigen Beaufschlagen mehrerer Zwischenkammern gezeigt sind, und
- Fig. 7:: eine Schnittansicht entlang der Linie A-A in Figur 6, die die Anordnung der mehreren hintereinander geschalteten Zwischenkammern und deren individuelle Druckversorgung zeigt.

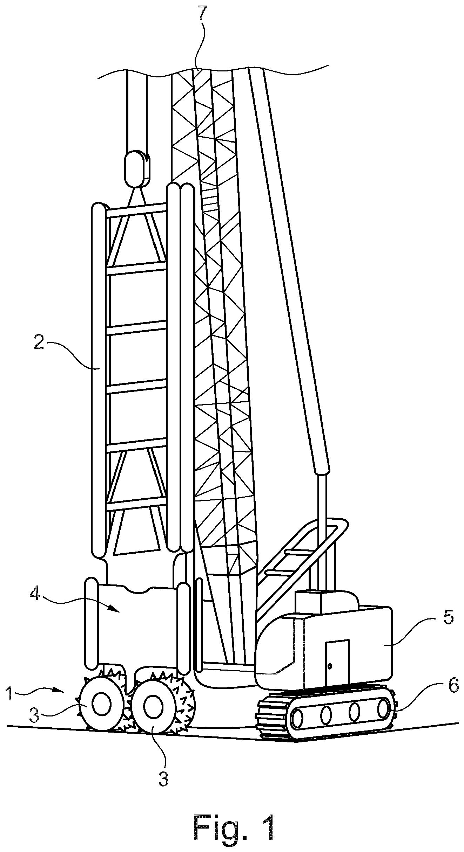

Wie Figur 1 zeigt, kann eine Schlitzwandfräse 1 einen länglichen, aufrecht angeordneten Fräsrahmen 2 aufweisen, der als Stabwerkträger ausgebildet sein und/oder zwei seitlich angeordnete Längsführungsprofile umfassen kann. An einem unteren Endabschnitt kann der Fräsrahmen 2 zumindest zwei Fräsräder 3 aufweisen, die nebeneinander angeordnet und um jeweils liegende Drehachsen rotatorisch antreibbar sein können, wobei sich die Drehachsen der Fräsräder 3 zueinander parallel und/oder senkrecht zur Flachseite des Fräsrahmens 2 erstrecken können.

Die Fräsräder 3 können dabei zueinander gegenläufig antreibbar sein. Ein Fräsantrieb 4 kann an einem unteren Endabschnitt des Fräsabschnitts 2 oberhalb der Fräsräder 3 angeordnet sein und einen oder mehrere Antriebsmotoren 8 beispielsweise in Form von Hydromotoren umfassen, die über eine oder mehrere Getriebestufen 9 die genannten Fräsräder 3 antreiben können.

Wie Figur 1 zeigt, kann der Fräsrahmen 2 mit den Fräsrädern 3 von einem Trägergerät 5 anhebbar und absenkbar gehalten bzw. daran aufgehängt sein. Das genannte Trägergerät 5 steht am Boden auf, in den der jeweilige Schlitz gefräst werden soll, und kann vorteilhafterweise verfahrbar sein. Insbesondere kann als Trägergerät 5 ein Seilbagger mit einem Fahrwerk, beispielsweise in Form eines Kettenfahrwerks 6, vorgesehen sein, wobei der Fräsrahmen 2 von einem Ausleger 7 des Trägergeräts 5 angehoben und abgesenkt werden kann.

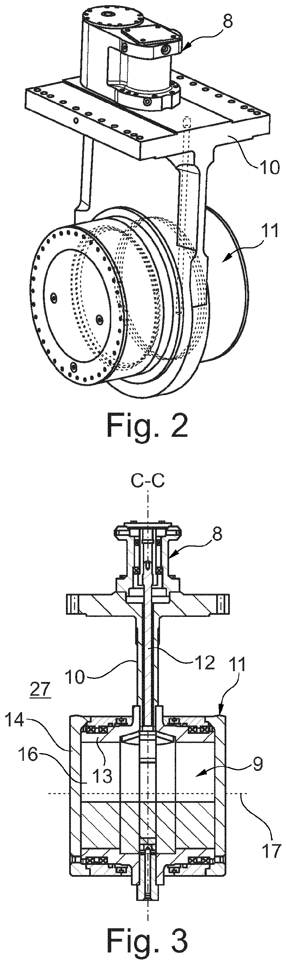

Wie die Figuren 2 bis 5 zeigen, kann die Antriebseinrichtung 4 an einem Lagerschild 10 angeordnet sein bzw. ein solches Lagerschild 10 umfassen, durch den die Antriebseinrichtung an dem genannten Fräsrahmen 2 befestigbar sein kann. Beispielsweise kann das genannte Lagerschild 10 ein T-förmiger Träger sein, der mit seinem oberen Abschnitt am Fräsrahmen 2 befestigt werden kann und an seinem unteren Abschnitt ein Antriebs- und/oder Getriebegehäuse 11 tragen kann, in welchem die genannte Getriebestufe 9 zumindest teilweise aufgenommen ist.

Der Antriebsmotor 8 kann beispielsweise am oberen Ende des Lagerschilds 10 befestigt sein und über eine Antriebswelle 12, die sich im Inneren des Lagerschilds 10 erstrecken kann, mit der Getriebestufe 9 antreibend gekoppelt sein. Die genannte Getriebestufe 9 kann dabei eine oder mehrere Planetengetriebestufen umfassen, um eines der genannten Fräsräder 3 anzutreiben.

Das Getriebegehäuse 11 umfasst dabei zwei zueinander verdrehbare Gehäuseteile 13 und 14, die durch eine Dichtungseinrichtung 15 zur Umgebung hin abgedichtet sind und einen Innenraum 16 umschließen, in dem die Getriebestufe 9 aufgenommen ist. Der genannte Innenraum 16 kann zumindest näherungsweise zylindrisch ausgebildet sein und sich entlang der Drehachse 17 der beiden Gehäuseteile 13 und 14 erstrecken, vgl. Figur 3.

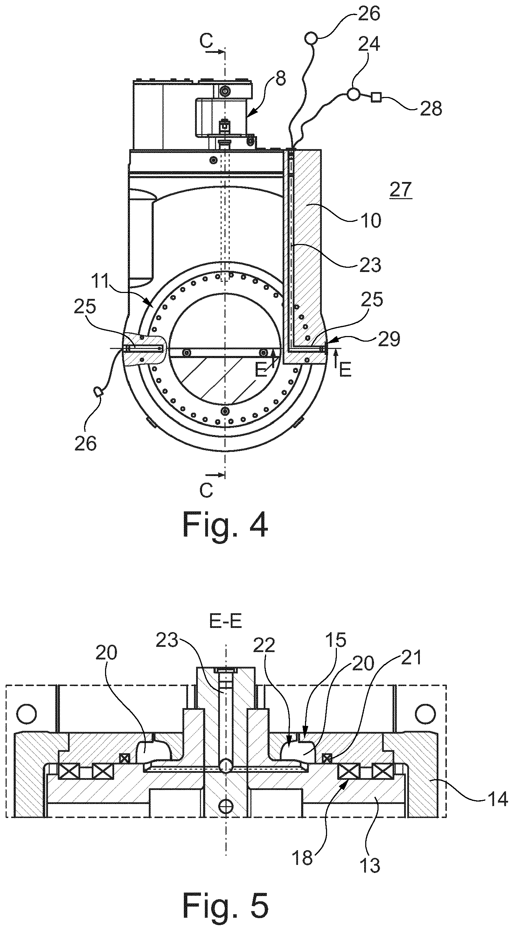

Eines der Gehäuseteile 13 kann vorteilhafterweise als hülsenförmiger Anschlussträger ausgebildet sein, der starr an dem Lagerschild 10 befestigt sein kann und sich von diesem in Richtung der Drehachse 17 zu gegenüberliegenden Seiten hin vorspringend erstreckt, vgl. Figur 3. Das andere Gehäuseteil 14 kann als napfförmiger Gehäusedeckel ausgebildet sein, der den Anschlussträger 13 stirnseitig verschließt und mit einem umlaufenden Randsteg umgreift. Ein Drehlager 18 beispielsweise in Form eines ein- oder mehrreihigen Wälzlagers stützt den zweiten Gehäuseteil 14 drehbar am ersten Gehäuseteil 13 ab, vgl. Figur 3 und 5.

Die Schnittstelle bzw. der Dichtungsspalt zwischen den beiden Gehäuseteilen 13 und 14 kann durch das genannte Drehlager 18 hindurch verlaufen und sich entlang der Umfangsseite des hülsenförmigen Anschlussträgers sowie an dessen Stirnseite zwischen den beiden Gehäuseteilen 13 und 14 erstrecken, vgl. Figur 3.

Eine Druckausgleichsausrichtung 19 umfasst eine druckbeaufschlagbare Zwischenkammer 20, die zwischen dem Innenraum 16 und der Umgebung angeordnet ist und einen Teil des Dichtungsspalts bzw. der Schnittstelle zwischen den beiden Gehäuseteilen 13 und 14 bildet und den Innenraum 16 gegenüber der Außenumgebung abdichtet.

Wie die Figuren 2 bis 5 zeigen, ist der hülsenförmige Gehäuseteil 13 an gegenüberliegenden Stirnseiten durch jeweils einen Gehäusedeckel 14 verschlossen, sodass zwei Dichtspalte und dementsprechend zwei Zwischenkammern 20 vorgesehen sind. Insoweit sich die beiden Zwischenkammern 20 gleichen, wird nachfolgend nur eine der beiden beschrieben.

Wie Figur 5 zeigt, ist die genannte Zwischenkammer 20 in Form einer Ringkammer ausgebildet, die sich konzentrisch zur Drehachse 17 erstreckt und umfangsseitig zwischen den beiden Gehäuseteilen 13 und 14 verläuft. Insbesondere erstreckt sich die Zwischenkammer 20 entlang des Außenumfangs des als Anschlussträger ausgebildeten Gehäuseteils 13 und/oder entlang des Lagerschilds 10, wobei die Zwischenkammer 20 zwischen dem Drehlager 18 und dem Lagerschild 10 angeordnet sein kann.

Wie Figur 5 weiter zeigt, ist die Zwischenkammer 20 durch eine Innendichtung 21 gegenüber dem Innenraum 16 abgedichtet und durch eine Außendichtung 22 gegenüber der Umgebung abgedichtet. Die Innen- und Außendichtungen 21 und 22 können voneinander verschieden ausgebildet sein, wobei vorteilhafterweise die Außendichtung 22 in Form einer Laufwerkdichtung ausgebildet sein kann. Unabhängig hiervon kann die Innendichtung 21 in Form einer Elastomer-Dichtung, beispielsweise in Form eines Dichtrings ausgebildet sein, der in einer nutförmigen Dichtausnehmung aufgenommen sein kann, um die Schnittstelle zwischen den beiden Gehäuseteilen 13 und 14 abzudichten. Die genannte Dichtnut, in der die elastomere Innendichtung 21 aufgenommen ist, kann sich in Umfangsrichtung erstrecken bzw. am Innenumfang des Gehäuseteils 14 und/oder am Außenumfang des Gehäuseteils 13 ausgebildet sein, sodass die Innendichtung 21 die umfangsseitige Schnittstelle zwischen den beiden Gehäuseteilen 13 und 14 abdichtet.

Die als Laufwerkdichtung ausgebildete Außendichtung 22 kann insbesondere zwei Metall- oder Hartmaterial-Dichtringe umfassen, die mit beispielsweise geläppten oder anderweitig fein bearbeiteten Laufflächen, insbesondere axialseitigen Stirnseiten gegeneinander verpresst sein und aufeinander ablaufen können. Die beiden Metalldichtringe können jeweils mit einem O-Ring oder einem Elastomer-Ring am Dichtungsgehäuse abgestützt und/oder dem gegenüber abgedichtet sein, sodass der eine Metalldichtring am stehenden Dichtungsgehäuseteil angeordnet und der andere Metalldichtring am sich drehenden Dichtungsgehäuseteil angeordnet ist, vgl. Figur 5.

Die Zwischenkammer 20 ist über einen Druckfluidkanal 23 von einer Druckquelle 24 her mit Druckfluid, beispielsweise Drucköl beaufschlagbar, wobei sich der genannte Druckmittelkanal 23 vorteilhafterweise durch den sich nicht drehenden Gehäuseteil 12 hindurch erstrecken kann. Insbesondere kann sich der genannte Druckmittelkanal 23 durch den Lagerschild 10 sowie den als Anschlussträger ausgebildeten Gehäuseteil 13 hindurcherstrecken, um mit der Zwischenkammer 20 zu kommunizieren. Die Mündung des Druckmittelkanals 23 am Lagerschild 10 kann als Druckfluidanschluss ausgebildet sein.

Um die Zwischenkammer 20 mit Druckmittel spülen zu können, können auch zwei Druckmittelkanäle 23 mit der Zwischenkammer 20 kommunizieren, vorteilhafterweise auf gegenüberliegenden Seiten angeordnet bzw. mit gegenüberliegenden Sektoren der Zwischenkammer 20 kommunizieren. Einer der Druckmittelkanäle 23 dient dabei als Zulauf und der andere als Ablauf, um das Druckmittel durch die Zwischenkammer 20 hindurchspülen zu können und hierdurch Verunreinigungen ausspülen zu können.

Die in Figur 4 zu sehenden, zusätzlichen seitlichen Druckmittelkanäle 25 können als Service-Anschluss dienen, beispielsweise um beim Spülen das Spülmedium zuführen und ablaufen lassen zu können. Dabei kann über einen solchen Druckmittelkanal 25 aber auch eine Drucküberwachungseinrichtung 26 angeschlossen sein, um den Kammerdruck in der Zwischenkammer 20 überwachen zu können, wie eingangs bereits erläutert.

Vorteilhafterweise kann die Drucküberwachungseinrichtung alternativ oder zusätzlich aber auch über den zuvor genannten Druckmittelkanal 23 angeschlossen werden, wodurch eine einfache Montage erreicht werden kann.

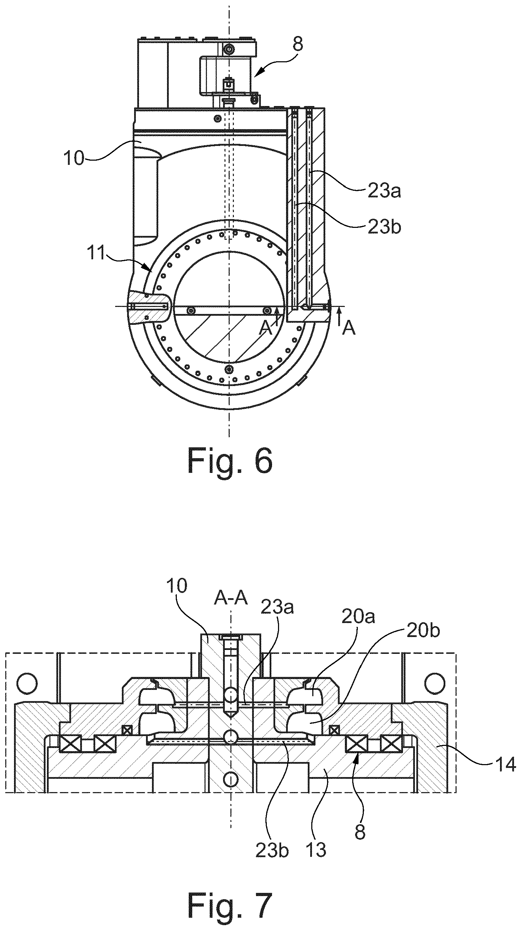

Wie die Figuren 6 und 7 zeigen, können einer Schnittstelle bzw. dem Dichtungsball zwischen zwei Gehäuseteilen 13 und 14 auch zwei oder gegebenenfalls auch mehr als zwei Zwischenkammern 20a und 20b zugeordnet sein, wobei die genannten Zwischenkammern 20a und 20b hintereinandergeschaltet sind, sodass sich Schmiermittel, das aus dem Innenraum 16 nach außen möchte, durch beide Zwischenkammern 20a und 20b hindurchzwängen müsste bzw. umgekehrt von der Umgebung her Schmutz durch beide Zwischenkammern 20a und 20b hindurch müsste, um in den Innenraum 16 zu gelangen.

Wie Figur 7 zeigt, können die beiden Zwischenkammern 20a und 20b jeweils als Ringkammer ausgebildet sein und einen unterschiedlichen Durchmesser besitzen, sodass die beiden Zwischenkammern 20 vorteilhafterweise ineinander verschachtelt angeordnet sein können. Insbesondere können die beiden Zwischenkammern 20a und 20b in einer gemeinsamen Ebene, die sich senkrecht zur Drehachse 17 erstreckt, angeordnet sein und/oder sich in radialer Richtung betrachtet überdecken.

Vorteilhafterweise können die mehreren Zwischenkammern 20a und 20b unabhängig voneinander mit Druck beaufschlagt werden. Hierzu kann jede Zwischenkammer 20a und 20b mit einem eigenen Druckmittelkanal 23a und 23b kommunizieren, welche Druckmittelkanäle 23a und 23b zwei separate Druckanschlüsse bilden können, vgl. Figur 6. Durch die unabhängige Druckbeaufschlagung kann bei Druckabfall in einer Zwischenkammer der Druckausgleich über die andere Kammer noch sichergestellt werden.

## Patentansprüche

1. Antriebs- und/oder Getriebegehäuse einer Antriebseinrichtung (4) für eine Schlitzwandfräse (1), wobei das Antriebs- und/oder Getriebegehäuse (11) einen Innenraum (16) zum Aufnehmen von Antriebs- und/oder Getriebeelementen umschließt und zwei relativ zueinander verdrehbare Gehäuseteile (13, 14) umfasst, die durch eine Dichtungseinrichtung (15) zueinander abgedichtet sind, **gekennzeichnet durch** zumindest eine druckbeaufschlagbare Zwischenkammer (20) zum Druckausgleich zwischen dem Innenraum (16) und der Umgebung, die zum Innenraum (16) durch eine Innendichtung (21) und zur Umgebung (27) hin durch eine Außendichtung (22) abgedichtet ist.

2. Antriebs- und/oder Getriebegehäuse nach dem vorhergehenden Anspruch, wobei die Innen- und Außendichtungen (21, 22) in Form voneinander verschiedener Dichtungstypen ausgebildet sind, wobei die Außendichtung (22) auf niedrigere Druckdifferenzen ausgelegt ist als die Innendichtung.

3. Antriebs- und/oder Getriebegehäuse nach einem der vorhergehenden Ansprüche, wobei die Außendichtung (22) eine Laufwerkdichtung aufweist, wobei die Laufwerkdichtung vorzugsweise zwei Hartmaterial-Dichtringe aufweist, die aufeinander abgleiten und durch jeweils einen elastischen und/oder elastomeren Dichtring an einem drehenden bzw. nicht drehenden Dichtungsgehäuseteil abgestützt sind, und/oder wobei die Innendichtung (21) einen elastomeren und/oder elastischen Dichtring aufweist, der in einer Dichtnut in einem der Gehäuseteile (13, 14) angeordnet ist.

4. Antriebs- und/oder Getriebegehäuse nach einem der vorhergehenden Ansprüche, wobei die zumindest eine Zwischenkammer (20) als Ringkammer ausgebildet ist, die sich konzentrisch um eine Drehachse (17) erstreckt, um die die beiden Gehäuseteile (13, 14) zueinander verdrehbar sind, wobei sich die Zwischenkammer (20) vorzugsweise um eine Außenmantelfläche eines der Gehäuseteile (13) herumerstreckt.

5. Antriebs- und/oder Getriebegehäuse nach einem der vorhergehenden Ansprüche, wobei die zumindest eine Zwischenkammer (20) ein Volumen besitzt, das weniger als 10% oder weniger als 5% des Volumens des Innenraums (16) des Antriebs- und/oder Getriebegehäuses (11) beträgt.

6. Antriebs- und/oder Getriebegehäuse nach einem der vorhergehenden Ansprüche, wobei sich die zumindest eine Zwischenkammer (20) zwischen einem Drehlager (18), durch das die beiden Gehäuseteile (13 und 14) drehbar aneinander abgestützt sind, und einem Lagerschild (10) erstreckt, an dem das Antriebs- und/oder Getriebegehäuse (11) befestigt ist, wobei die Zwischenkammer (20) durch die Innendichtung (21) gegenüber dem Drehlager (18) abgedichtet ist.

7. Antriebs- und/oder Getriebegehäuse nach einem der vorhergehenden Ansprüche, wobei einer der beiden Gehäuseteile (14) ein rotierend antreibbares Abtriebselement bildet, das lösbare Befestigungsmittel zum Befestigen eines Fräsrads (3) der Schlitzwandfräse (3) aufweist.

8. Antriebs- und/oder Getriebegehäuse nach einem der vorhergehenden Ansprüche, wobei eines der Gehäuseteile (13) eine Gehäusehülse und das andere Gehäuseteil (14) einen napfförmigen Gehäusedeckel bildet, der die Gehäusehülse stirnseitig umschließt und umfangsseitig umgreift oder umfangsseitig überdeckt.

9. Antriebs- und/oder Getriebegehäuse nach dem vorhergehenden Anspruch, wobei die zumindest eine Zwischenkammer (20) im Bereich der umfangsseitigen Überdeckung des Gehäusedeckels und der Gehäusehülse vorgesehen ist.

10. Antriebs- und/oder Getriebegehäuse nach einem der vorhergehenden Ansprüche, wobei zum Durchspülen der zumindest einen Zwischenkammer (20) mit einem Spülmittel, insbesondere Spülöl, ein mit der Zwischenkammer (20) kommunizierender Zulauf und ein mit der Zwischenkammer (20) ebenfalls kommunizierenden Ablauf zum Zuführen und Abführen des Spülmittels vorgesehen ist.

11. Antriebs- und/oder Getriebegehäuse nach einem der vorhergehenden Ansprüche, wobei mehrere Zwischenkammern (20) vorgesehen und demselben Dichtungsspalt zwischen den beiden Gehäuseteilen (13, 14) zugeordnet sind, wobei die mehreren Zwischenkammern (20a, 20b) vorzugsweise unabhängig voneinander druckbeaufschlagbar und/oder hintereinander geschaltet sind.

12. Antriebseinrichtung für eine Schlitzwandfräse (1), die ein Antriebs- und/oder Getriebegehäuse, das gemäß einem der vorhergehenden Ansprüche ausgebildet ist, aufweist.

13. Antriebseinrichtung nach dem vorhergehenden Anspruch, wobei eine Druckquelle zum Beaufschlagen der Zwischenkammer (20) mit einem Kammerdruck vorgesehen ist und wobei eine Steuervorrichtung (28) zum automatischen Steuern des von der Druckquelle (24) in der Zwischenkammer (20) bereitgestellten Kammerdrucks in Abhängigkeit des Umgebungsdrucks und/oder der Frästiefe vorgesehen ist.

14. Antriebseinrichtung nach einem der Ansprüche 12-13, wobei eine Druck-überwachungsvorrichtung (26) zum Überwachen des in der Zwischenkammer (20) herrschenden Kammerdrucks vorgesehen ist, wobei die Druck-überwachungsvorrichtung (26) vorzugsweise Druckverlust-Bestimmungsmittel zum Bestimmen eines vorbestimmten Druckabfalls und/oder Bestimmen eines Druckverlaufs über die Zeit sowie eine Anzeigevorrichtung zum Anzeigen eines Wartungssignals bei einem vorbestimmten Druckabfall oder einem vorbestimmten Druckverlauf umfasst, und/oder wobei der Innenraum (60) mit einem Schmiermittel befüllt ist, wobei der Schmiermittelfüllstand zwischen 10% bis 65% oder zwischen 25% bis 50% oder zwischen 35% bis 45% des Innenraumvolumens beträgt, wobei eine Füllstandsüberwachungseinrichtung zum Überwachen des Schmiermittelfüllstands in dem Innenraum (16) vorgesehen ist, wobei die Anzeigevorrichtung zum Anzeigen eines Wartungssignals dazu ausgebildet ist, ein Verschleißsignal für das Verschleißen der Innendichtung (21) abzugeben, wenn ein vorbestimmter Druckabfall oder vorbestimmter Druckverlauf des Kammerdrucks in der Zwischenkammer (20) mit einem Anstieg des Schmiermittelfüllstands des Innenraum (16) einhergeht.

15. Schlitzwandfräse mit zumindest einem an einem Fräsrahmen (2) drehbar gelagerten Fräsrad (3), das von einer Antriebseinrichtung rotatorisch antreibbar ist, wobei die genannte Antriebseinrichtung gemäß einem der Ansprüche 12-14 ausgebildet ist.

## Claims

1. Drive case and/or transmission case of a drive device (4) for a slurry wall cutter (1), wherein the drive case and/or transmission case (11) surrounds an inner space (16) for receiving drive and/or transmission elements and comprises two case parts (13, 14) that are rotatable relative to one another and that are sealed with respect to one another by a seal device (15), **characterized by** at least one intermediate chamber (20), which can be pressurized, for pressure equalization between the inner space (16) and the environment, and which is sealed with respect to the inner space (16) by an inner seal (21) and with respect to the environment (27) by an outer seal (22).

2. Drive case and/or transmission case in accordance with the preceding claim, wherein the inner and outer seals (21, 22) are configured in the form of mutually different seal types, wherein the outer seal (22) is configured for lower pressure differences than the inner seal.

3. Drive case and/or transmission case in accordance with any one of the preceding claims, wherein the outer seal (22) comprises a face seal, wherein the face seal preferably comprises two hard material sealing rings that slide off on one another and that are supported by a respective elastic and/or elastomeric sealing ring at a rotating or non-rotating sealing case part, and/or wherein the inner seal (21) comprises an elastomeric and/or elastic sealing ring that is arranged in a sealing groove in one of the case parts (13, 14).

4. Drive case and/or transmission case in accordance with any one of the preceding claims, wherein the at least one intermediate chamber (20) is configured as an annular chamber that extends concentrically around an axis of rotation (17) about which the two case parts (13, 14) are rotatable with respect to one another, wherein the intermediate chamber (20) preferably extends around an outer jacket surface of one of the case parts (13).

5. Drive case and/or transmission case in accordance with any one of the preceding claims, wherein the at least one intermediate chamber (20) has a volume that amounts to less than 10% or less than 5% of the volume of the inner space (16) of the drive case and/or transmission case (11).

6. Drive case and/or transmission case in accordance with any one of the preceding claims, wherein the at least one intermediate chamber (20) extends between a pivot bearing (18) by which the two case parts (13 and 14) are rotatably supported at one another and a bearing shell (10) to which the drive case and/or transmission case (11) is fastened, wherein the intermediate chamber (20) is sealed with respect to the pivot bearing (18) by the inner seal (21).

7. Drive case and/or transmission case in accordance with any one of the preceding claims, wherein one of the two case parts (14) forms a rotatingly drivable output element that comprises releasable fastening means for fastening a cutting wheel (3) of the slurry wall cutter (1).

8. Drive case and/or transmission case in accordance with any one of the preceding claims, wherein one of the case parts (13) forms a case sleeve and the other case part (14) forms a bowl-shaped case cover that surrounds the case sleeve at the end face and engages around it peripherally or covers it peripherally.

9. Drive case and/or transmission case in accordance with the preceding claim, wherein the at least one intermediate chamber (20) is provided in the region of the peripheral covering of the case cover and of the case sleeve.

10. Drive case and/or transmission case in accordance with any one of the preceding claims, wherein an inflow communicating with the intermediate chamber (20) and an outflow likewise communicating with the intermediate chamber (20) to supply and discharge the flushing agent is provided for the flushing through of the at least one intermediate chamber (20) with a flushing agent, in particular flushing oil.

11. Drive case and/or transmission case in accordance with any one of the preceding claims, wherein a plurality of intermediate chambers (20) are provided, and being associated with the same seal gap between the two case parts (13, 14), wherein the plurality of intermediate chambers (20a, 20b) preferably have pressure applied independently of one another, and/or are connected after one another.

12. Drive device for a slurry wall cutter (1), which comprises a drive case and/or transmission case configured according to any one of the preceding claims.

13. Drive device according to the preceding claim, wherein a pressure source is provided for applying chamber pressure to the intermediate chamber (20) and wherein a control device (28) is provided for the automatic control of the chamber pressure provided by the pressure source (24) in the intermediate chamber (20) depending on the environmental pressure and/or on the cutting depth.

14. Drive device according to one of claims 12 to 13, wherein a pressure monitoring device (26) is provided for monitoring the chamber pressure present in the intermediate chamber (20), wherein the pressure monitoring device (26) preferably comprises pressure loss determination means for determining a predetermined pressure drop and/or for determining a pressure progression over time and a display device for displaying a maintenance signal on a predetermined pressure drop or a predetermined pressure progression, and/or wherein the inner space (60) is filled with a lubricant, wherein the lubricant level amounts to between 10% and 65% or between 25% and 50% or between 35% and 45% of the inner space volume, wherein a level monitoring device is provided for monitoring the lubricant level in the inner space (16), wherein the display device for displaying a maintenance signal is configured to emit a wear signal for the wear of the inner seal (21) when a predetermined pressure drop or a predetermined pressure progression of the chamber pressure in the intermediate chamber (20) is accompanied by an increase in the lubricant level of the inner space (16).

15. Slurry wall cutter having at least one cutting wheel (3) that is rotatably supported at a cutting frame (2) and that is rotatably drivable by a drive device, wherein the drive device is configured in accordance with any one of the claims 12-14.

## Revendications

1. Boîtier d'entraînement et/ou de transmission d'un système d'entraînement (4) pour une fraise de rideau souterrain (1), le boîtier d'entraînement et/ou de transmission (11) renfermant un espace intérieur (16) pour loger des éléments d'entraînement et/ou de transmission et comprend deux parties de boîtier (13, 14) pouvant tourner l'une par rapport à l'autre, qui sont étanchéifiées l'une par rapport à l'autre par un système d'étanchéité (15), **caractérisé par** au moins une chambre intermédiaire (20) pouvant être soumise à l'action d'une pression pour la compensation de pression, entre l'espace intérieur (16) et l'environnement (27), et est étanchéifiée par rapport à l'espace intérieur (16) par un joint d'étanchéité intérieur (21) et est étanchéifiée par rapport à l'environnement (27) par un joint d'étanchéité extérieur (22).

2. Boîtier d'entraînement et/ou de transmission selon la revendication précédente, dans lequel les joints d'étanchéité intérieur et extérieur (21, 22) sont réalisés sous la forme de types de joint d'étanchéité différents les uns des autres, dans lequel le joint d'étanchéité extérieur (22) est conçu pour des différences de pression inferieures que le joint d'étanchéité intérieur.

3. Boîtier d'entraînement et/ou de transmission selon la revendication précédente, dans lequel le joint d'étanchéité extérieur (22) présente un joint de mécanisme d'entraînement, dans lequel le joint de mécanisme d'entraînement présente de préférence deux bagues d'étanchéité en matériau dur qui glissent l'une sur l'autre et sont soutenues par respectivement une bague d'étanchéité élastique et/ou élastomère sur une partie de boîtier d'étanchéité rotative ou non rotative et/ou dans lequel le joint d'étanchéité intérieur (21) présente une bague d'étanchéité élastique et/ou élastomère, qui est disposée dans une rainure d'étanchéité dans une des parties de boîtier (13, 14).

4. Boîtier d'entraînement et/ou de transmission selon l'une quelconque des revendications précédentes, dans lequel l'au moins une chambre intermédiaire (20) est réalisée en tant que chambre annulaire qui s'étend de manière concentrique autour d'un axe de rotation (17) autour duquel les deux parties de boîtier (13, 14) peuvent être tournées l'une par rapport à l'autre, dans lequel la chambre intermédiaire (20) s'étend de préférence tout autour d'une surface d'enveloppe extérieure d'une des parties de boîtier (13).

5. Boîtier d'entraînement et/ou de transmission selon l'une quelconque des revendications précédentes, dans lequel l'au moins une chambre intermédiaire (20) possède un volume, qui représente moins de 10 % ou moins de 5 % du volume de l'espace intérieur (16) du boîtier d'entraînement et/ou de transmission (11).

6. Boîtier d'entraînement et/ou de transmission selon l'une quelconque des revendications précédentes, dans lequel l'au moins une chambre intermédiaire (20) s'étend entre un palier rotatif (18), par lequel les deux parties de boîtier (13 et 14) sont soutenues l'une sur l'autre de manière rotative, et un flasque (10), sur lequel le boîtier d'entraînement et/ou de transmission (11) est fixé, dans lequel la chambre intermédiaire (20) est étanchéifiée par rapport au palier rotatif (18) par le joint d'étanchéité intérieur (21).

7. Boîtier d'entraînement et/ou de transmission selon l'une quelconque des revendications précédentes, dans lequel une des deux parties de boîtier (14) forme un élément de sortie pouvant être entraîné en rotation, qui présente des moyens de fixation amovibles pour fixer une roue de fraisage (3) de la fraise de rideau souterrain (1).

8. Boîtier d'entraînement et/ou de transmission selon l'une quelconque des revendications précédentes, dans lequel une des deux parties de boîtier (13) forme une gaine de boîtier et l'autre partie de boîtier (14) forme un couvercle de boîtier en forme de godet qui renferme côté frontal la gaine de boîtier et l'entoure côté périphérique ou la recouvre côté périphérique.

9. Boîtier d'entraînement et/ou de transmission selon la revendication précédente, dans lequel l'au moins une chambre intermédiaire (20) est prévue dans la zone du recouvrement côté périphérique du couvercle de boîtier et de la gaine de boîtier.

10. Boîtier d'entraînement et/ou de transmission selon l'une quelconque des revendications précédentes, dans lequel une arrivée communiquant avec la chambre intermédiaire (20) et une sortie communiquant également avec la chambre intermédiaire (20) pour amener et évacuer l'agent de rinçage est prévu pour rincer complètement l'au moins une chambre intermédiaire (20) avec un agent de rinçage, en particulier de l'huile de rinçage.

11. Boîtier d'entraînement et/ou de transmission selon l'une quelconque des revendications précédentes, dans lequel plusieurs chambres intermédiaires (20) sont prévues et sont associées à la même fente d'étanchéité entre les deux parties de boîtier (13, 14), dans lequel les plusieurs chambres intermédiaires (20a, 20b) sont de préférence soumises à l'action d'une pression indépendamment l'une de l'autre et/ou sont montées les unes derrière les autres.

12. Système d'entraînement pour une fraise de rideau souterrain (1), qui présente un boîtier d'entraînement et/ou de transmission conçu selon l'une quelconque des revendications précédentes.

13. Système d'entraînement selon la revendication précédente, dans lequel une source de pression pour la mise en pression de la chambre intermédiaire (20) avec une pression de chambre est prévu et dans lequel un dispositif de commande (28) est prévu pour commander automatiquement la pression de chambre fournie par la source de pression (24) dans la chambre intermédiaire (20) en fonction de la pression environnante et/ou de la profondeur de fraisage.

14. Système d'entraînement selon l'une quelconque des revendications 12 à 13, dans lequel un dispositif de surveillance de pression (26) est prévu pour surveiller la pression de chambre régnant dans la chambre intermédiaire (20), dans lequel le dispositif de surveillance de pression (26) comprend de préférence des moyens de définition de perte de pression pour définir une baisse de pression prédéfinie et/ou pour définir une variation de pression dans le temps ainsi qu'un dispositif d'affichage pour afficher un signal de maintenance dans le cas d'une baisse de pression prédéfinie ou d'une variation de pression prédéfinie, et/ou dans lequel l'espace intérieur (16) est rempli d'un agent de lubrification, dans lequel le niveau de remplissage d'agent de lubrification est compris entre 10 % à 65 % ou entre 25 % à 50 % ou entre 35 % à 45 % du volume d'espace intérieur, dans lequel un système de surveillance de niveau de remplissage est prévu pour surveiller le niveau de remplissage d'agent de lubrification dans l'espace intérieur (16), dans lequel le dispositif d'affichage pour afficher un signal de maintenance est réalisé pour émettre un signal d'usure pour l'usure du joint d'étanchéité intérieur (21) quand une baisse de pression prédéfinie ou une variation de pression prédéfinie de la pression de chambre dans la chambre intermédiaire (20) va de pair avec une hausse du niveau de remplissage d'agent de lubrification de l'espace intérieur (16).

15. Fraise de rideau souterrain avec au moins une roue de fraisage (3) montée de manière à pouvoir tourner sur un châssis de fraisage (2), qui peut être entraînée de manière rotative par un système d'entraînement, dans laquelle ledit système d'entraînement est réalisé selon l'une quelconque des revendications 12 à 14.
